(19) Europäisches Patentamt
European Patent Office
Office européen des brevets

(11) EP 1 201 727 B1

(12) EUROPÄISCHE PATENTSCHRIFT

(45) Veröffentlichungstag und Bekanntmachung des Hinweises auf die Patenterteilung:
**16.02.2005 Patentblatt 2005/07**

(51) Int Cl.[7]: **C09K 19/46**

(21) Anmeldenummer: **01124220.3**

(22) Anmeldetag: **15.10.2001**

# (54) Flüssigkristallmedium und elektrooptische Flüssigkristallanzeige

Liquid crystalline medium and electro-optic liquid crystal display

Milieu liquide cristallin et affichage à cristaux liquides électro-optique

(84) Benannte Vertragsstaaten:
**AT BE CH CY DE DK ES FI FR GB GR IE IT LI LU MC NL PT SE TR**

(30) Priorität: **27.10.2000 DE 10053285**

(43) Veröffentlichungstag der Anmeldung:
**02.05.2002 Patentblatt 2002/18**

(73) Patentinhaber: **MERCK PATENT GmbH**
**64293 Darmstadt (DE)**

(72) Erfinder:
- **Suermann, Juliane**
  **64297 Darmstadt (DE)**
- **Rieger, Bernhard, Dr.**
  **64839 Münster-Altheim (DE)**

(56) Entgegenhaltungen:
**EP-A- 0 681 021**
**EP-A- 0 717 093**
**EP-A- 0 719 849**
**EP-A- 0 776 958**
**EP-A- 0 824 141**
**EP-A- 0 857 774**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft flüssigkristalline Medien die mindestens eine Verbindung der Formel I und mindestens eine Verbindung der Formel II

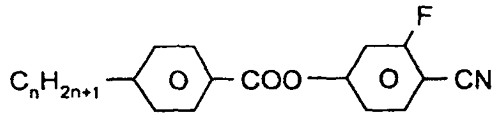

I

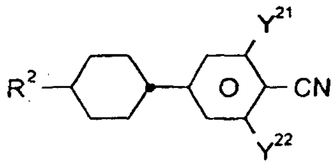

II

worin

n eine ganze Zahl von 1 bis 9,

$R^2$ Alkenyl oder Alkenyloxy mit 2 bis 7 C-Atomen, bevorzugt Alkenyl, und

$Y^{21}$ und $Y^{22}$ jeweils voneinander unabhängig H oder F, bevorzugt mindestens einer H, besonders bevorzugt beide H

bedeuten,
enthalten, sowie die Verwendung dieser flüssigkristallinen Medien in Flüssigkristallanzeigen und diese Flüssigkristallanzeigen, insbesondere STN-Anzeigen.

In derartigen Flüssigkristallanzeigen werden die Flüssigkristalle als Dielektrika verwendet, deren optische Eigenschaften sich bei Anlegen einer elektrischen Spannung reversibel ändern. Elektrooptische Anzeigen die Flüssigkristalle als Medien verwenden sind dem Fachmann bekannt. Diese Flüssigkristallanzeigen verwenden verschiedene elektrooptische Effekte. Die gebräuchlichsten hiervon sind der TN-Effekt (Twisted nematic, mit einer homogenen, nahezu planaren Ausgangsorientierung der Flüssigkristalle und einer um ca. 90° verdrillten nematischen Struktur) und der STN-Effekt (Supertwisted nematic) und der SBE-Effekt (Supertwisted birefringence effect). Bei diesen und ähnlichen elektrooptischen Effekten werden flüssigkristalline Medien mit positiver dielektrischer Anisotropie ($\Delta\varepsilon$) verwendet.

Bei STN-Anzeigen, die in der vorliegenden Anmeldung alle gängigen und bekannten Typen von Anzeigen mit höherer Verdrillung umfassen, wie z.B. SBE-, GH (Guest Host) STN- und OMI (optical mode interference)-Anzeigen ebenso wie kompensierte STN-Anzeigen, wie DSTN- und Filmkompensierte STN-Anzeigen, ist der Flüssigkristalldirektor von einer Seite der Flüssigkristallschicht zur anderen um einen gegebenen Winkel von mehr als 90°, typischer weise von 180° oder mehr, bis zu 600°, typischer weise bis zu 270° verdrillt. Dies wird einerseits durch entsprechende Orientierung der Vorzugsrichtungen der Flüssigkristallorientierung der beiden Substrate zueinander erreicht. Die Vorzugsrichtung der Orientierung auf den Substraten wird durch eine anisotrope Vorbehandlung, typischer weise durch Reiben einer speziellen, meist polymeren organischen Schicht in einer Richtung, oder durch Aufdampfen von $SiO_x$ unter einem Winkel, erzielt. Andererseits wird ein chirales Flüssigkristall.medium eingesetzt, das aus mesogenen chiralen Substanzen besteht oder, am weitesten verbreitet, aus einem nicht chiralen Medium besteht dem eine chirale Substanz (ein sogenannter Dotierstoff) zugesetzt wird. Die letzte Alternative wird meist bevorzugt, da sie durch Variation der Konzentration des Dotierstoffs ermöglicht die Verdrillung der Flüssigkristallschicht auf nahezu beliebige Werte einzustellen.

Dabei ist darauf zu achten, daß das Verhältnis aus Schichtdicke der Flüssigkristallschicht (d) zur ungestörten Ganghöhe des Flüssigkristalls (P von Englisch Cholesteric Pitch) genügend groß ist um die gewünschte Verdrillung zu erzeugen. Hierzu wird in der Regel ein Wert der Verdrillung von mehr als 90° (bzw.d/P = 90°/360° = 0,25) unterhalb der gewünschten Verdrillung eingestellt. Dieser sogenannte geometrische Grenzwert beträgt also z. B. für Zellen mit einer Verdrillung von 180°: 0,5-0,25 = 0,25 und für eine Zelle mit 240° Verdrillung: 0,667-0,25 = 0,417. Der obere geometrische Grenzwert liegt jeweils bei einer um 180° höheren Verdrillung, also bei einem um 0,5 größeren d/P-Wert. Bei Anlegen einer elektrischen Spannung vergrößert sich jedoch der cholesterische pitch und somit nimmt der untere

Grenzwert des d/P-Verhältnisses zu. Obwohl der selbe Effekt auch an der oberen Grenze auftritt kann dies praktisch nicht ausgenutzt werden, da im Bereich der höheren Dotierung beim Anlegen einer elektrischen Spannung ein unerwünschter elektrooptischer Effekt in Form eines zur Direktorientierung in der Mitte der Flüssigkristallschicht senkrechten Brechungsindexgitters, des sogenannten Streifen-Übergangs, auftritt. Dieser Effekt reduziert die obere Grenze der möglichen Dotierung signifikant und ist meist, insbesondere bei höheren Verdrillungswinkeln, viel stärker ausgeprägt als der Anstieg der unteren Grenze beim Anlegen der Spannung.

Für den einwandfreien Betrieb von STN-Anzeigen wird jedoch ein möglichst über die gesamte Anzeigefläche, zumindest jedoch über ein Pixel, gleichmäßiger Übergang der Flüssigkristallschicht von der Ausgangsorientierung zur Endorientierung benötigt. Bei diesem Übergang bewegt sich der Direktor der Flüssigkristallschicht innerhalb jeder parallel gedachten Lage unabhängig vom Ort gleichsinnig und im gleichen Winkel zueinander. Dieser Übergang wird auch Freedericksz-Übergang genannt. Dieser erwünschte Übergang tritt jedoch nicht bei allen möglichen Parameterkombinationen auf. In Abhängigkeit sowohl von den Eigenschaften des Flüssigkristalls, als auch von der Konstruktion der Anzeige tritt beim Anlegen einer elektrischen Spannung ein unerwünschter Übergang ein, der aufgrund seines optischen Erscheinungsbilds als Streifen-Übergang oder Englisch striped domain transition / distortion bezeichnet wird. Dieser Übergang wird gegenüber dem erwünschten Freedericksz-Übergang bevorzugt wenn die Flüssigkristallparameter, insbesondere die elastischen Konstanten und die dielektrische Anisotropie, für eine steile elektrooptische Kennlinie günstig sind. Er wird ferner durch ein großes d/P-Verhältnis begünstigt. Und hängt nicht zuletzt vom verwendeten Verdrillungswinkel und dem Oberflächenanstellwinkel ab. Hierbei gilt: je größer der Verdrillungswinkel, desto größer muß der Oberflächenanstellwinkel sein um einen stabilen Betrieb der Anzeige zu ermöglichen. Typischer weise werden bei den allgemein häufig verwendeten Verdrillungswinkeln von 180°, 220° und 240° Anstellwinkel von mindestens 2°, 3° bzw. 4 bis 5° verwendet.

Da bei Anzeigen im allgemeinen, also auch bei Anzeigen nach diesen Effekten, die Betriebsspannung möglichst gering sein soll, werden Flüssigkristallmedien mit großer dielektrischer Anisotropie eingesetzt, die in der Regel überwiegend und meist sogar weitestgehend aus Flüssigkristallverbindungen mit der entsprechenden dielektrischen Anisotropie bestehen. Also bei dielektrisch positiven Medien aus Verbindungen mit positiver dielektrischer Anisotropie. Es werden typischerweise allenfalls nennenswerte Mengen an dielektrisch neutralen Flüssigkristallverbindungen eingesetzt. Flüssigkristallverbindungen mit dem der dielektrischen Anisotropie des Medium entgegengesetzten Vorzeichen der dielektrischen Anisotropie werden in der Regel äußerst sparsam oder gar nicht eingesetzt.

Eine Ausnahme bilden hier die STN-Anzeigen, die auch Gegenstand der vorliegenden Anmeldung sind. Bei STN-Anzeigen können z. B. nach DE 41 00 287 dielektrisch positive Flüssigkristallmedien die dielektrisch negative Flüssigkristallverbindungen enthalten eingesetzt werden um die Steilheit der elektrooptischen Kennlinie zu erhöhen.

Die Bildpunkte der Flüssigkristallanzeigen können direkt angesteuert werden, zeitsequentiell, also im Zeitmultiplexverfahren oder mittels einer Matrix von aktiven, elektrisch nichtlinearen Elementen angesteuert werden.

Bei STN-Anzeigen ist die Ansteuerung im Zeitmultiplexverfahren am weitesten verbreitet. Hierbei werden die Spalten und Zeilen einer matrixförmigen Anordnung von Flüssigkristallschaltelementen mit einem Ansteuerschema zum Beispiel nach Alt und Pleschko angesteuert. Hierbei reagiert das Flüssigkristallmedium der Flüssigkristallanzeigeelemente auf den Mittelwert der Ansteuerspannung (rms, von Englisch: root mean square"). Besonders bei höheren Multiplexverhältnissen und bei sehr schnell schaltenden Flüssigkristallschaltelementen gilt dies jedoch nicht mehr. Hier kann die Ansteuerung alternativ durch "multi line addressing" oder mittels "active addressing" erfolgen.

Gängiger weise spricht man bei Multiplexverhältnissen von 1:32 und weniger von "low multiplex drive", bei Multiplexverhältnissen im Bereich von ca. 1:64 bis 1:100 von "mid multiplex drive" und bei Multiplexverhältnissen von etwa 1:200 und mehr (z. B. 1:240, 1:400 oder 1:480) von "high multiplex drive".

Flüssigkristallmedien enthaltend Verbindungen der Formel

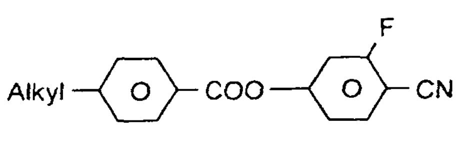

sind aus verschiedenen Veröffentlichungen, z. B. aus EP 0 533 988 und DE 197 46 793 bekannt. Sie haben jedoch niedrige Klärpunkte bei gleichzeitig hohen Viskositäten schlechter Löslichkeit und einem niedrigen Verhältnis der elastischen Konstanten $k_3/k_1$.

Flüssigkristallmedien enthaltend Verbindungen der Formel

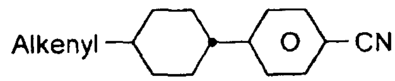

sind aus verschiedenen Veröffentlichungen, z. B. aus US 4,676,604 bekannt. Sie haben jedoch nur eine mittelmäßige dielektrische Anisotropie.

Somit ist ersichtlich, daß ein Bedarf an Flüssigkristallmedien mit hohem Klärpunkt, kleiner Schwellenspannung, niedriger Viskosität und großer Steilheit der elektrooptischen Kennlinie besteht.

Somit bestand und besteht ein großer Bedarf an Flüssigkristallmedien, die die Nachteile der Medien aus dem Stand der Technik nicht oder zumindest in deutlich vermindertem Umfang aufweisen und die vor allem eine niedrige Schwellenspannung und eine steile Kennlinie aufweisen.

Dies wird von den erfindungsgemäßen Flüssigkristallmedien erreicht, die jeweils eine oder mehrere Verbindung(en) der Formel I und eine oder mehrere Verbindung(en) der Formel II

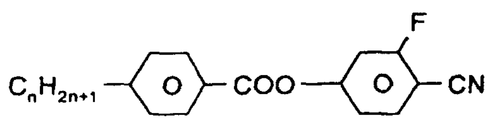

I

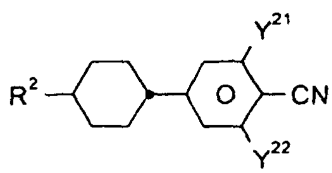

II

worin

| | |
|---|---|
| n | eine ganze Zahl von 1 bis 9, |
| $R^2$ | Alkenyl oder Alkenyloxy mit 2 bis 7 C-Atomen, bevorzugt Alkenyl, und |
| $Y^{21}$ und $Y^{22}$ | jeweils voneinander unabhängig H oder F, bevorzugt mindestens einer H, besonders bevorzugt beide H |

bedeuten,
enthält.

In einer bevorzugten Ausführungsform enthalten die Flüssigkristallmedien gemäß der vorliegenden Erfindung

a) eine oder mehrere stark dielektrisch positive Verbindung(en) der Formel I

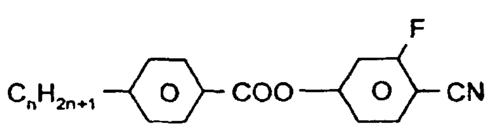

I

worin

n die oben unter Formel I angegebene Bedeutung

hat,

b) eine oder mehrere dielektrisch positive Verbindung(en) der Formel II

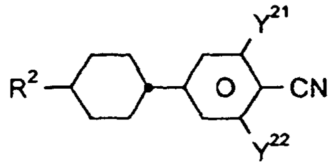

II

worin

$R^2$, $Y^{21}$ und $Y^{22}$ die oben unter Formel II angegebene Bedeutung haben und

c) eine oder mehrere Verbindung(en) der Formel III

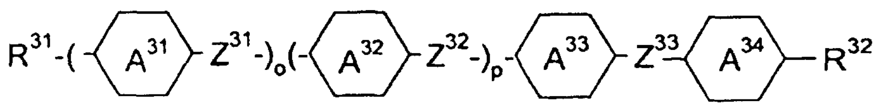

III

worin

$R^{31}$ und $R^{32}$ jeweils unabhängig voneinander die oben bei Formel I für $R^1$ gegebene Bedeutung besitzen und

$Z^{31}$, $Z^{32}$ und $Z^{33}$ jeweils unabhängig voneinander $-CH_2CH_2-$, -CH=CH-, -COO- oder eine Einfachbindung

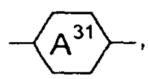,

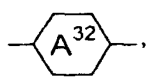,

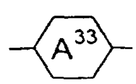

und

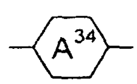

jeweils unabhängig voneinander

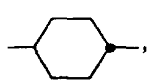,

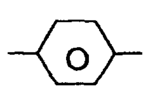, 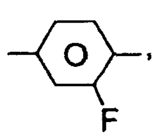, 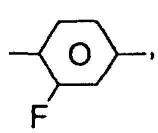, 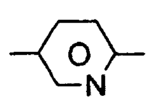

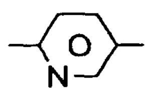, 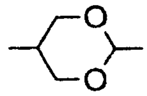 oder 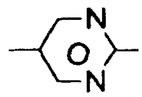

und

o und p unabhängig voneinander 0 oder 1

bevorzugt jedoch

$R^{31}$ und $R^{32}$ jeweils unabhängig voneinander Alkyl oder Alkoxy mit 1-5 C-Atomen oder Alkenyl mit 2-5 C-Atomen,

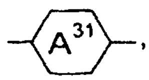,

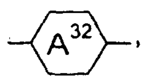,

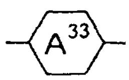

und

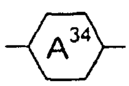

jeweils unabhängig voneinander

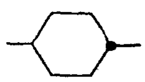

oder

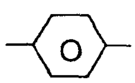

und ganz besonders bevorzugt mindestens zwei dieser Ringe

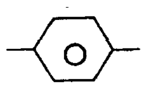 und/oder 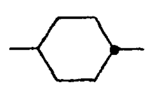,

wobei ganz besonders bevorzugt zwei benachbarte Ringe direkt verknüpft sind und zwar bevorzugt

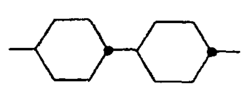

oder

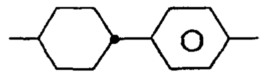

,

bedeuten.

Die Verbindungen der Formel III sind dielektrisch neutrale Verbindungen mit mittleren Werten der optischen Anisotropie.

In einer weiteren bevorzugten Ausführungsform enthält das Flüssigkristallmedium alternativ oder zusätzlich, bevorzugt zusätzlich, eine oder mehrere Verbindung(en) der Formel IV

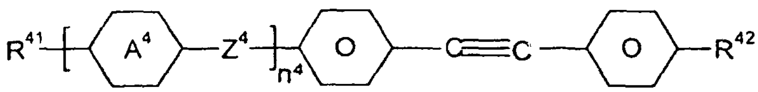

IV

$R^{41}$ und $R^{42}$ jeweils voneinander unabhängig Alkyl oder Alkoxy mit 1 bis 5 C-Atomen, bevorzugt n-Alkyl oder n-Alkoxy, bevorzugt mit 1 bis 5 C-Atomen oder Alkoxyalkyl, Alkenyl, Alkinyl oder Alkenyloxy mit 2 bis 7 C-Atomen, bevorzugt geradkettiges Alkoxyalkyl, 1E-Alkenyl oder 1E-Alkenyloxy, bevorzugt mit 1 bis 5 C-Atomen,

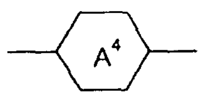 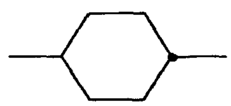 oder 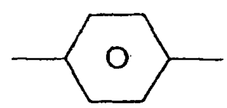 ,

$Z^4$ COO, $-CH_2CH_2-$, -C≡C- oder bevorzugt eine Einfachbindung, wobei die Phenylringe unabhängig voneinander optional einfach oder zweifach durch F substituiert sein können.

Bevorzugt enthält das Flüssigkristallmedium eine oder mehrere Verbindung(en) der Formel V

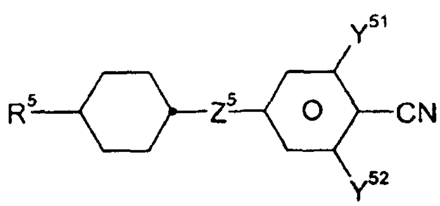

V

worin

$R^5$ Alkyl mit 1 bis 9 C-Atomen, bevorzugt n-Alkyl, bevorzugt mit 2 bis 7 C-Atomen,

$Z^5$ $-CH_2CH_2-$, -COO- oder eine Einfachbindung, bevorzugt $-CH_2CH_2-$ oder eine Einfachbindung, besonders bevorzugt eine Einfachbindung und

$Y^{51}$ und $Y^{52}$ jeweils unabhängig voneinander H oder F, bevorzugt einer H und der andere F oder beide F, besonders bevorzugt beide H

bedeuten.

Optional enthält das Flüssigkristallmedium eine oder mehrere Verbindung(en) der Formel VI

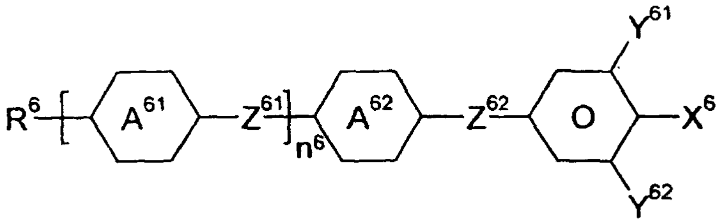

VI

worin

$R^6$ die oben unter Formel I für $R^1$ angegebene Bedeutung hat,

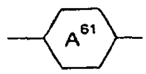

und

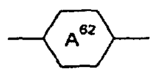

jeweils unabhängig voneinander

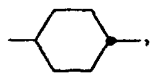,

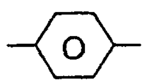, 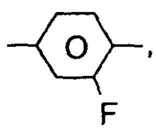, 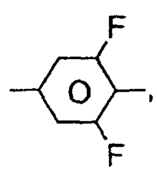,

oder

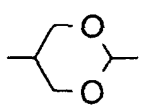,

$Z^{61}$ und $Z^{62}$ jeweils unabhängig voneinander, $-CH_2-CH_2-$, -CH=CH-, -COO- oder eine Einfachbindung,

$X^6$ F, Cl, $OCF_2H$, $OCF_3$, $CF_3$,

$Y^{61}$ und $Y^{62}$ jeweils unabhängig voneinander H oder F und

$n^6$ 0, 1 oder 2, bevorzugt 0 oder 1

bedeuten.

Die erfindungsgemäßen Flüssigkristallmedien enthalten bevorzugt eine oder mehrere Verbindung(en) der Formel I ausgewählt aus der Gruppe der Verbindungen der Unterformeln II1 bis II4

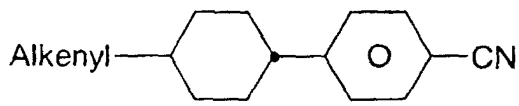

II1

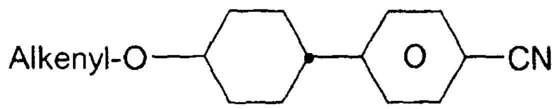

II2

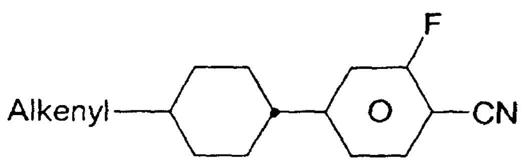

II3

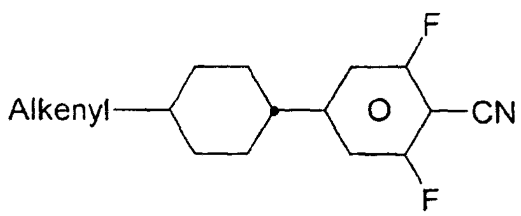

II4

worin

Alkenyl $C_nH_{2n+1}$-CH=CH-$(CH_2)_m$,

n 0 bis 5,

m 0 bis 5 und

n+m 0 bis 5

bedeuten.

Besonders bevorzugt enthält das Flüssigkristallmedium eine oder mehrere Verbindung(en) ausgewählt aus der Gruppe der Verbindungen der Formeln III1 bis III3:

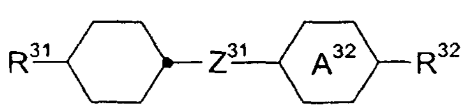

III1

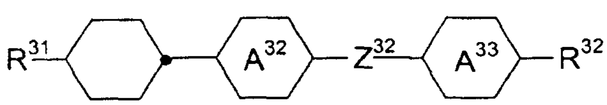

III2

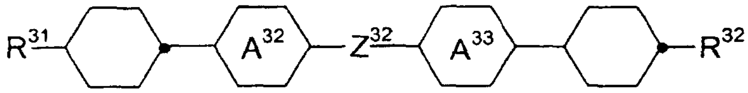

III3

worin $R^{31}$, $R^{32}$, $Z^{31}$, $Z^{32}$,

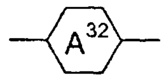 und 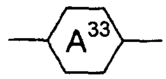

jeweils die oben bei Formel III angegebene Bedeutung besitzen.

Insbesondere bevorzugt enthält das Flüssigkristallmedium eine oder mehrere Verbindung(en) ausgewählt aus der Gruppe der Verbindungen der Formeln III1a bis III1d, III2a bis III2e, III3a bis III3c und III4a:

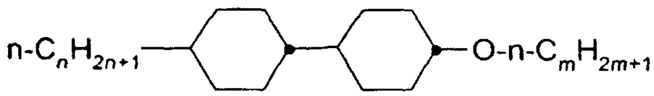

III1a

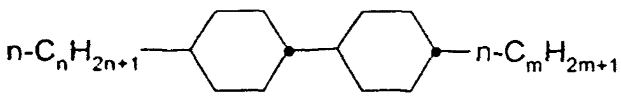

III1b

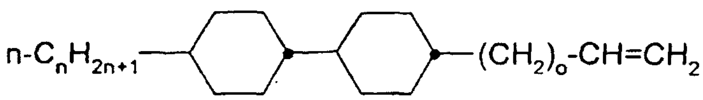

III1c

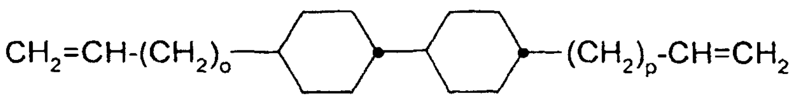

III1d

worin n und m jeweils unabhängig voneinander 1 bis 5 und o und p jeweils sowohl davon als auch voneinander unabhängig 0 bis 3 bedeuten,

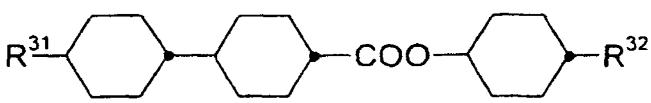

III2a

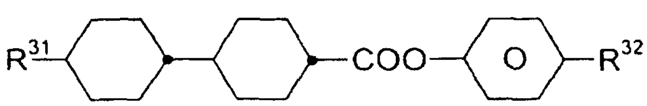

III2b

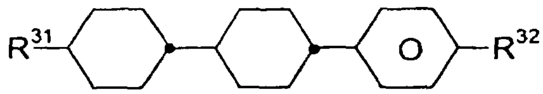

III2c

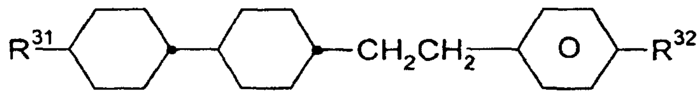

III2d

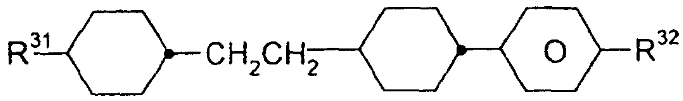

III2e

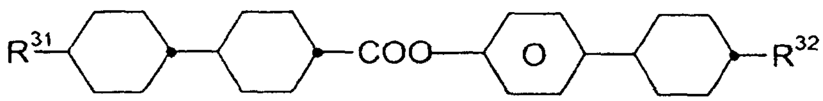

III3a

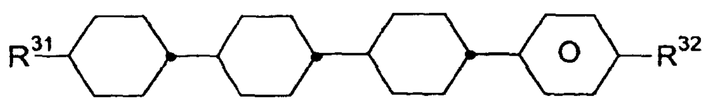

III3b

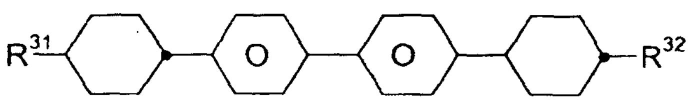

III3c

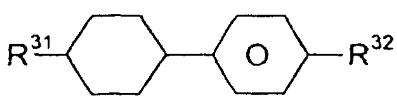

III4a

worin $R^{31}$ und $R^{33}$ jeweils die oben unter Formel III1 angegebene Bedeutung besitzen und die Phenylringe optional fluoriert sein können, jedoch nicht so, daß die Verbindungen mit denen der Formel II und ihren Unterformeln identisch sind. Bevorzugt ist $R^{31}$ n-Alkyl mit 1 bis 5 C-Atomen, insbesondere bevorzugt mit 1 bis 3 C-Atomen und $R^{32}$ n-Alkyl oder n-Alkoxy mit 1 bis 5 C-Atomen oder Alkenyl mit 2 bis 5 C-Atomen. Hiervon sind insbesondere Verbindungen der Formeln III1a bis III1d bevorzugt.

Bevorzugt enthält das Flüssigkristallmedium eine oder mehrere Verbindung(en) ausgewählt aus der Gruppe der Verbindungen der Formeln IV1a bis IV1c und IV2a bis IV2d:

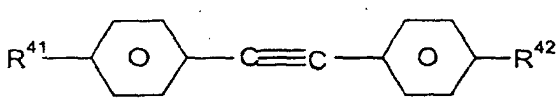

IV1a

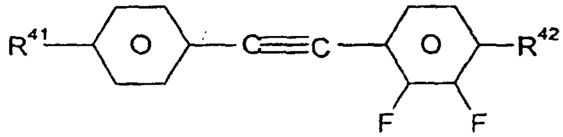

IV1b

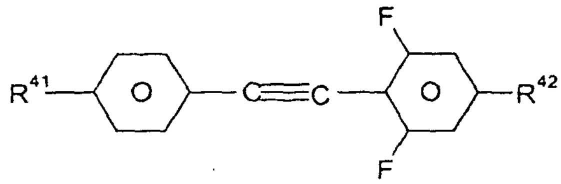

IV1c

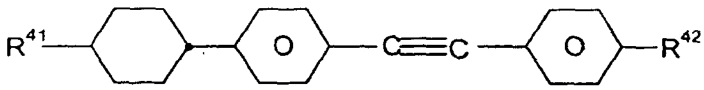

IV2a

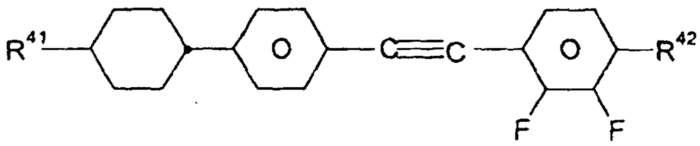

IV2b

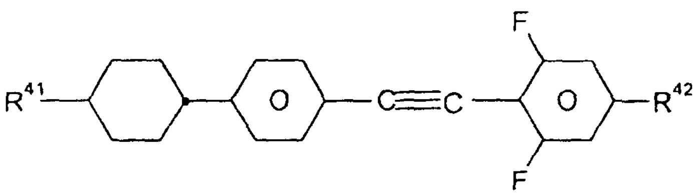

IV2c

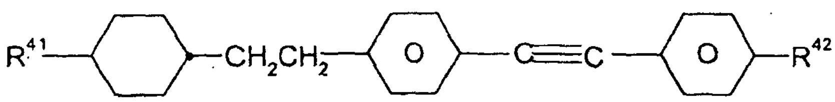

IV2d

worin

$R^{41}$ und $R^{42}$ die oben unter Formel IV gegebene Bedeutung haben.

Bevorzugt enthält das Flüssigkristallmedium eine oder mehrere Verbindung(en) ausgewählt aus der Gruppe der Verbindungen der Formeln V1a bis V1c und V2a bis V2c:

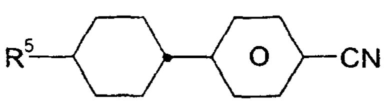

V1a

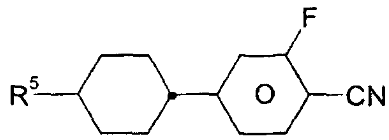

V1b

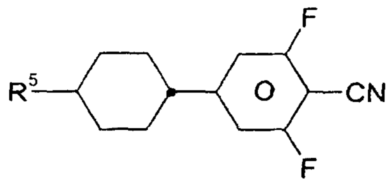

V1c

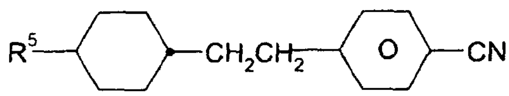

V2a

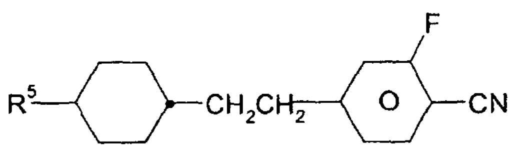

V2b

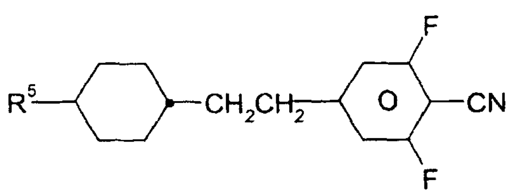

V2c

worin

$R^5$ die oben unter Formel V gegebene Bedeutung hat.

Bevorzugt enthält das Flüssigkristallmedium eine oder mehrere Verbindung(en) ausgewählt aus der Gruppe der Verbindungen der Formeln VI1a bis VI1d und VI2a bis VI2d:

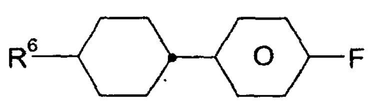

VI1a

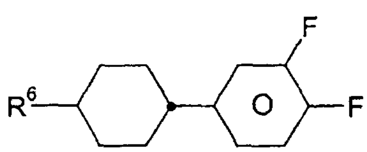

VI1b

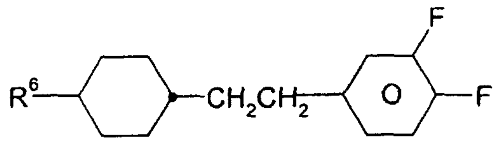

VI1c

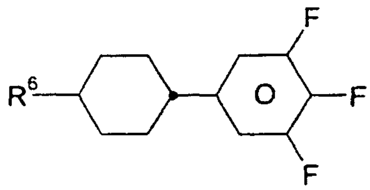

VI1d

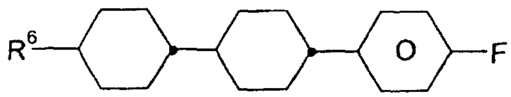

VI2a

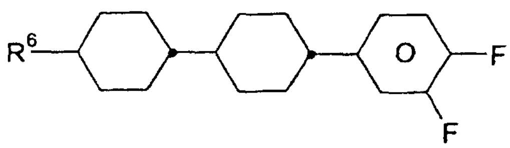

VI2b

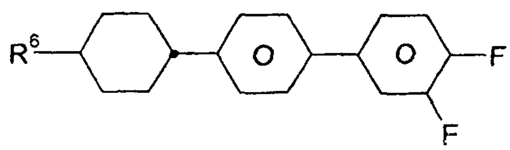

VI2c

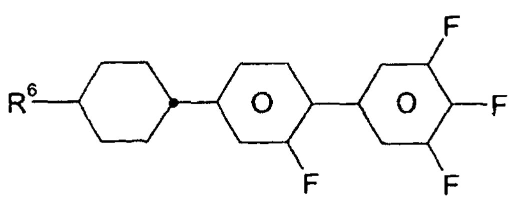

VI2d

worin

$R^6$ die oben unter Formel VI gegebene Bedeutung hat.

In einer bevorzugten Ausführungsform enthalten die erfindungsgemäßen Flüssigkristallmedien insgesamt bezogen auf die Gesamtmischung

4 % bis 50 % an Verbindungen der Formel I,
10 % bis 45 % an Verbindungen der Formel II und
12 % bis 45 % an Verbindungen der Formel III.

Hier, wie in der gesamten vorliegenden Anmeldung, bedeutet, wenn nicht ausdrücklich anders angegeben, der Begriff Verbindungen, zur Verdeutlichung auch als Verbindung(en) geschrieben, sowohl eine Verbindung, als auch mehrere Verbindungen.

Hierbei werden die einzelnen Verbindungen, in der Regel, in Konzentrationen von 1 % bis 30 % bevorzugt von 2 % bis 20 % und besonders bevorzugt von 4 % bis 16 % angesetzt.

In einer bevorzugten Ausführungsform enthalten die Flüssigkristallmedien insbesondere bevorzugt insgesamt

5 % bis 45 % an Verbindungen der Formel I,
14 % bis 40 % an Verbindungen der Formel II,
15 % bis 40 % an Verbindungen der Formel III,
0 % bis 30 % an Verbindungen der Formel IV,
0 % bis 25 % an Verbindungen der Formel V, und
4 % bis 40 % an Verbindungen der Formel VI.

Ganz besonders bevorzugt enthalten die Flüssigkristallmedien in dieser Ausführungsform insgesamt

8 % bis 35 % an Verbindungen der Formel I,
20 % bis 35 % an Verbindungen der Formel II,
20 % bis 35 % an Verbindungen der Formel III,
2 % bis 23 % an Verbindungen der Formel IV,
0 % bis 20 % an Verbindungen der Formel V, und
8 % bis 35 % an Verbindungen der Formel VI.

In einer besonders bevorzugten Ausführungsform die mit den oben beschriebenen bevorzugten Ausführungsformen für die bevorzugten Konzentrationsbereiche identisch sein kann und bevorzugt identisch ist, enthalten die Flüssigkristallmedien

- eine oder mehrere Verbindungen der Formel I1 und/oder
- eine oder mehrere Verbindungen der Formel II1 und/oder
- eine oder mehrere Verbindungen ausgewählt aus der Gruppe der Verbindungen der Formeln III1a bis III1c und/oder
  - eine oder mehrere Verbindungen ausgewählt aus der Gruppe der Verbindungen der Formeln III2 bis III3.

Hierbei sind besonders bevorzugt Flüssigkristallmedien welche

- eine oder mehrere Verbindungen der Formel I, insbesondere jeweils pro Verbindung in Konzentrationen von 2 % bis 15 %,
- eine oder mehrere Verbindungen der Formel II1, insbesondere jeweils pro Verbindung in Konzentrationen von 5 % bis 30 %,
- eine oder mehrere Verbindungen der Formeln III1, bevorzugt ausgewählt aus der Gruppe der Formeln III1a bis III1d, insbesondere jeweils pro Verbindung in Konzentrationen von 3 % bis 25 %,
- eine oder mehrere Verbindungen der Formel III2, insbesondere jeweils pro Verbindung in Konzentrationen von 3 % bis 12 %, bevorzugt jeweils mindestens eine Verbindung bei der R Alkyl,
- eine oder mehrere Verbindungen der Formeln III1a und/oder III1c, insbesondere in Konzentrationen von 4 % bis 25 %, pro Verbindung bevorzugt jeweils mindestens je eine Verbindung der Formeln III1a und III1c,
- eine oder mehrere Verbindungen der Formel III2a enthalten und
- eine oder mehrere Verbindung(en) der Formel V12b enthalten insbesondere bevorzugt solche worin $R^6$ Alkenyl bedeutet.

Die erfindungsgemäßen Flüssigkristallmedien weisen bevorzugt nematische Phasen von jeweils mindestens

von 0°C bis 70°C, bevorzugt von -30°C bis 80°C und ganz besonders bevorzugt von -40°C bis 85°C auf. Insbesondere bevorzugt ist der Klärpunkt der Medien ≥ 90°C. Hierbei bedeutet der Begriff eine nematische Phase aufweisen einerseits, daß bei tiefen Temperaturen bei der entsprechenden Temperatur keine smektische Phase und keine Kristallisation beobachtet wird und andererseits, daß beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, einer der elektrooptischen Anwendung entsprechenden Schichtdicke, für mindestens 100 Stunden überprüft. Bei hohen Temperaturen wird der Klärpunkt nach üblichen Methoden in Kapillaren gemessen.

Ferner sind die erfindungsgemäßen Flüssigkristallmedien durch Werte der optischen Anisotropien gekennzeichnet die sich insbesondere für STN-Anzeigen mit üblichen Schichtdicken eignen. Die Doppelbrechungswerte sind im Bereich von gleich 0,100 bis 0,180, bevorzugt im Bereich von 0,120 bis 0,170 und ganz besonders bevorzugt im Bereich von 0,120 bis 0,160 und am allermeisten bevorzugt im Bereich von 0,130 bis 0,150.

Außerdem weisen die erfindungsgemäßen Flüssigkristallmedien relativ kleine Werte für die Freedericksz-Schwellenspannung von kleiner oder gleich 3,0 V, bevorzugt kleiner oder gleich 2,7 V, besonders bevorzugt kleiner oder gleich 2,6 V und ganz besonders bevorzugt kleiner oder gleich 2,5 V auf.

Diese bevorzugten Werte für die einzelnen physikalischen Eigenschaften werden auch jeweils miteinander kombiniert eingehalten. So weisen erfindungsgemäße Medien insbesondere die folgenden Eigenschaftskombinationen auf:

| | Phase: T / °C | Δn | Schwelle(240°/5°) / V |
|---|---|---|---|
| Erfindungsgemäß | ≤ -20 bis ≥ 80 | 0,12 ≤ bis ≤ 0,18 | ≤ 2,0 |
| Bevorzugt | ≤ -30 bis ≥ 90 | 0,13 ≤ bis ≤ 0,17 | ≤ 1,9 |
| Besonders bevorzugt | ≤ -40 bis ≥ 100 | 0,14 ≤ bis ≤ 0,07 | ≤ 1,8 |

wobei hier, wie in der gesamten Anmeldung, "≤" kleiner oder gleich sowie "≥" größer oder gleich bedeuten.

Besonders bevorzugt gelten die oben genannten bevorzugten Konzentrationsbereiche auch für diese bevorzugte Kombination von Verbindungen.

Der Ausdruck "Alkyl" umfaßt vorzugsweise geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfaßt vorzugsweise geradkettige und verzweigte Alkenylgruppen mit 2-7 Kohlenstoffatomen, insbesondere die geradkettigen Gruppen. Besonders bevorzugte Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl und $C_7$-6-Alkenyl, insbesondere $C_2$-$C_7$-1E-Alkenyl, $C_4$-$C_7$-3E-Alkenyl und $C_5$-$C_7$-4-Alkenyl. Beispiele weiterer bevorzugter Alkenylgruppen sind Vinyl, 1E-Propenyl,1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl", bzw. Alkoxyalkyl umfaßt vorzugsweise geradkettige Reste der Formel $C_nH_{2n+1}$-O-$(CH_2)_m$, worin n und m jeweils unabhängig voneinander 1 bis 6 bedeuten. Vorzugsweise ist n = 1 und m 1 bis 6.

Durch geeignete Wahl der Bedeutungen der Parameter der Verbindungen, insbesondere von $R^{11}$, $R^{12}$, $R^{21}$, $R^{21}$, $R^{31}$, $R^{32}$, $L^1$ und L2 können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von $k_{33}/k_{11}$ im Vergleich zu Alkyl- und Alkoxyresten.

Eine $-CH_2CH_2$-Gruppe führt im allgemeinen zu höheren Werten von $k_{33}/k_{11}$ im Vergleich zu einer einfachen Kovalenzbindung. Höhere Werte von $k_{33}/k_{11}$ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

In der vorliegenden Anmeldung bedeuten die Begriffe dielektrisch sehr stark positive Verbindungen solche

Verbindungen mit einem $\Delta\varepsilon > 20$, dielektrisch stark positive Verbindungen solche Verbindungen mit einem $\Delta\varepsilon$ im Bereich ab unter 20 bis $\Delta\varepsilon = 10$, dielektrisch schwach positive Verbindungen solche Verbindungen mit einem $\Delta\varepsilon$ im Bereich ab unter 10 bis $\Delta\varepsilon > 1{,}5$, dielektrisch neutrale Verbindungen solche mit $-1{,}5 \leq \Delta\varepsilon \leq 1{,}5$ und dielektrisch negative Verbindungen solche mit $\Delta\varepsilon < -1{,}5$. Hierbei wird die dielektrische Anisotropie der Verbindungen bestimmt indem 10 % der Verbindungen in einem flüssigkristallinen Host gelöst werden und von dieser Mischung die Kapazität in mindestens jeweils einer Testzelle mit 10 µm Dichte mit homeotroper und mit homogener Oberflächenorientierung bei 1 kHz bestimmt wird. Die Meßspannung beträgt typischerweise 0,3 V, es können jedoch auch 0,5 V bis 1,0 V verwendet werden. Die Meßspannung beträgt jedoch weniger als die kapazitive Schwelle der jeweiligen Flüssigkristallmischung.

Als Hostmischung wird für dielektrisch positive Verbindungen ZLI-4792 und für dielektrisch neutrale sowie dielektrisch negative Verbindungen ZLI-3086, beide von Merck KGaA, Deutschland, verwendet. Aus der Änderung der Dielektrizitätskonstanten der Hostmischung nach Zugabe der zu untersuchenden Verbindung und Extrapolation auf 100 % der eingesetzten Verbindung werden die Werte für die jeweiligen zu untersuchenden Verbindungen erhalten.

Der Begriff Schwellenspannung bezieht sich üblicherweise auf die optische Schwelle für 10 % relativen Kontrast ($V_{10}$).

Alle Konzentrationen in dieser Anmeldung, soweit nicht explizit anders vermerkt, sind in Massenprozent angegeben und beziehen sich auf die entsprechende Gesamtmischung. Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20 °C, sofern nicht explizit anders angegeben. $\Delta n$ wird bei 589 nm und $\Delta\varepsilon$ bei 1 kHz bestimmt.

Die Schwellenspannungen sowie die anderen elektrooptischen Eigenschaften wurden in bei Merck KGaA, Deutschland, hergestellten Testzellen unter Verwendung von weißem Licht mit einem kommerziellen Meßgerät z. B. LCD 5000 der Fa. Otsuka, Japan bestimmt. Als Orientierungschicht/en wurden verschiedene Polyimide (als Standardorientierungsschicht wurde SE 4110) von Nissan Chemicals, Japan verwendet. Die Zellen wurden je nach $\Delta n$ der Flüssigkristalle mit einer Dicke entsprechend einer optischen Verzögerung $d \cdot \Delta n$ der Zellen von ca. 0,85 µm gewählt. Die Zellen hatten einen Verdrillungswinkel von 240°. Der d/P-Wert wurde mittels dem auch chiralen Dotierstoff S-811 (Merck KGaA, Darmstadt, Deutschland) auf 0,53 eingestellt. Die Zellen wurden im sogenannten gelben Modus (Englisch: "yellow mode") betrieben. Die charakteristischen Spannungen wurden alle bei senkrechter Beobachtung bestimmt. Die Schwellenspannung wurde als $V_{10}$ für 10 % relativen Kontrast angegeben, die Mittgrauspannung $V_{50}$ für 50 % relativen Kontrast und die Sättigungsspannung $V_{90}$ für 90 % relativen Kontrast.

Bei einigen Flüssigkristallmedien wurde die Schwellenspannung zusätzlich als kapazitive Schwelle $V_0$ (auch Freedericksz-Schwelle genannt) bestimmt.

Der Oberflächenanstellwinkel wurde mit der Methode der Rotation eines anisotropen Kristalls in einem HeNe-Laserstrahl bestimmt. Das Interferenzbild einer antiparallel geriebenen Zelle mit 50 µm Schichtdicke des Flüssigkristalls, gefüllt mit ZLI-2293 der Fa. Merck KGaA, Deutschland wurde mit einem Detektor registriert und der Oberflächenanstellwinkel aus dem Symmetriewinkel errechnet.

Die erfindungsgemäßen Flüssigkristallmedien können bei Bedarf auch weitere Zusatzstoffe in den üblichen Mengen enthalten. Die eingesetzte Menge dieser Zusatzstoffe beträgt ebenso wie die der chiralen Dotierstoffe insgesamt 0 % bis 10 % bezogen auf die Menge der gesamten Mischung bevorzugt 0,1 % bis 6 %. Die Konzentrationen der einzelnen eingesetzten Verbindungen beträgt bevorzugt 0,1 bis 3 %. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 bis 30, besonders bevorzugt aus 6 bis 20 und ganz besonders bevorzugt aus 10 bis 16 Verbindungen, die auf herkömmliche Weise gemischt werden. In der Regel wird die gewünschte Menge der in geringerer Menge verwendeten Komponenten in den den Hauptbestandteil ausmachenden Komponenten gelöst, zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z.B. unter Verwendung von Vormischungen oder aus einem sogenannten "Multi Bottle System" herzustellen.

Mittels geeigneter Zusatzstoffe können die erfindungsgemäßen Flüssigkristallphasen derart modifiziert werden, daß sie in jeder bisher bekannt gewordenen Art von ECB-Anzeige und insbesondere von PA LCDs, sowie IPS-Anzeige einsetzbar sind.

Die nachstehenden Beispiele dienen zur Veranschaulichung der Erfindung, ohne sie zu beschränken. In den Beispielen sind der Schmelzpunkt T(C,N), der Übergang von der smektischen (S) zur nematischen (N) Phase T(S,N) und Klärpunkt T(N,I) einer Flüssigkristallsubstanz in Grad Celsius angegeben. Die Prozentangaben sind, soweit nicht explizit anders gekennzeichnet, vor- und nachstehend Massenprozente und die physikalischen Eigenschaften sind die Werte bei 20 °C, sofern nicht explizit anders angegeben.

Alle angegebenen Werte für Temperaturen in dieser Anmeldung sind °C und alle Temperaturdifferenzen entsprechend Differenzgrad, sofern nicht explizit anders angegeben.

In der vorliegenen Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten $R^1$, $R^2$, $L^2$ und $L^2$:

| Code für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nN.F.F | $C_nH_{2n+1}$ | CN | F | F |
| nF | $C_nH_{2n+1}$ | F | H | H |
| nF.F | $C_nH_{2n+1}$ | F | H | F |
| nF.F.F | $C_nH_{2n+1}$ | F | F | F |
| nOF | $OC_nH_{2n+1}$ | F | H | H |
| nCl | $C_nH_{2n+1}$ | Cl | H | H |
| nCl.F | $C_nH_{2n}+_1$ | Cl | H | F |
| nCl.F.F | $C_nH_{2n+1}$ | Cl | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_3$.F | $C_nH_{2n+1}$ | $OCF_3$ | H | F |
| $nOCF_3$.F.F | $C_nH_{2n+1}$ | $OCF_3$ | F | F |
| $nOCF_2$ | $C_nH_{2n+1}$ | $OCHF_2$ | H | H |
| $nOCF_2$.F | $C_nH_{2n+1}$ | $OCHF_2$ | H | F |
| $nOCF_2$.F.F | $C_nH_{2n+1}$ | $OCHF_2$ | F | F |
| nS | $C_nH_{2n+1}$ | NCS | H | H |
| rVsN | $C_rH_{2r+1}$-CH=CH-$C_sH_{2s}$- | CN | H | H |
| rEsN | $C_rH_{2r+1}$-O-$C_sH_{2s}$- | CN | H | H |
| nAm | $C_nH_{2n+1}$ | $COOC_mH_{2m+1}$ | H | H |

**Tabelle A:**

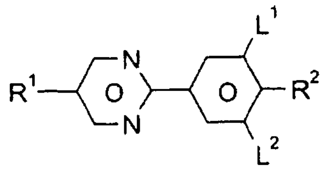

**PYP**

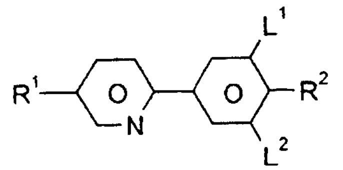

**PYRP**

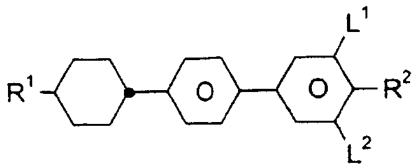

**BCH**

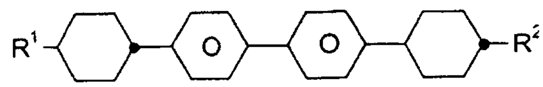

**CBC**

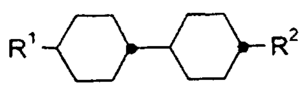

**CCH**

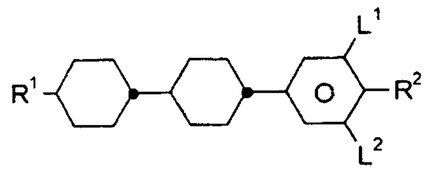

**CCP**

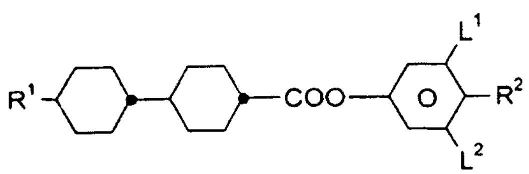

**CP**

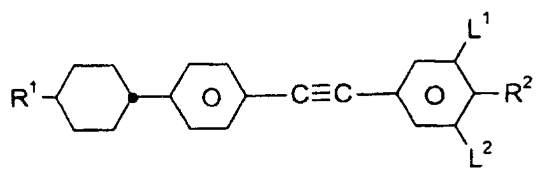

**CPTP**

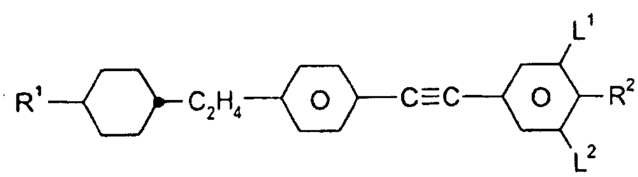

**CEPTP**

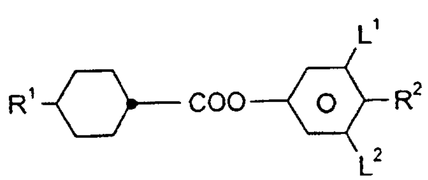

**D**

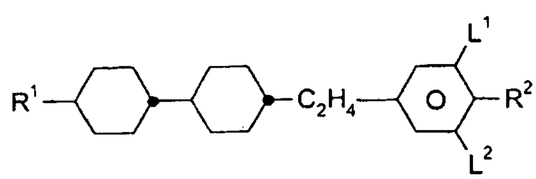

**ECCP**

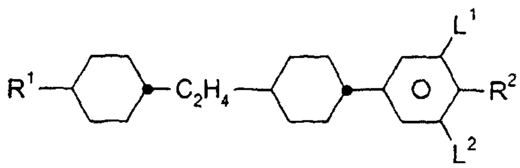

CECP

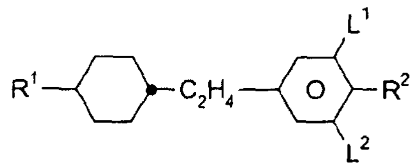

EPCH

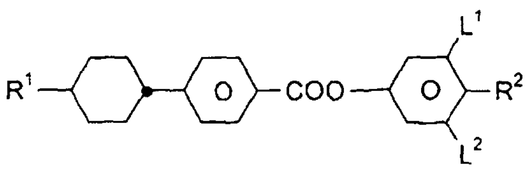

HP

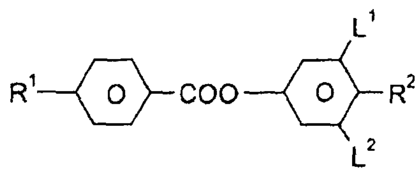

ME

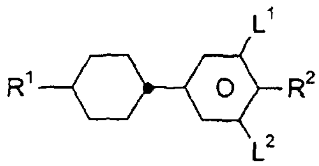

PCH

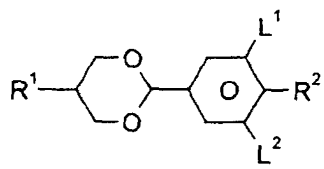

PDX

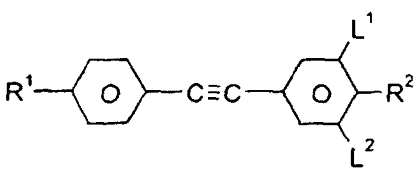

PTP

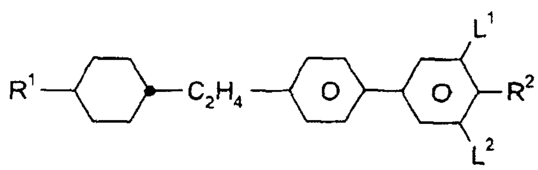

BECH

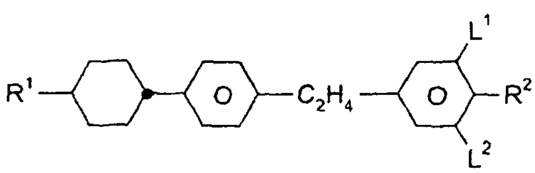

EBCH

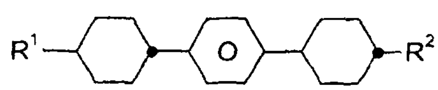

CPC

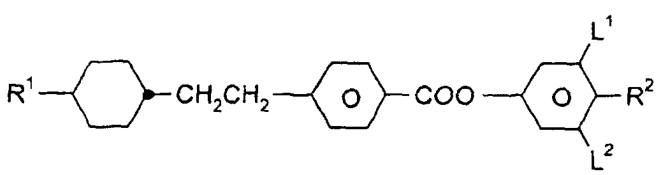

EHP

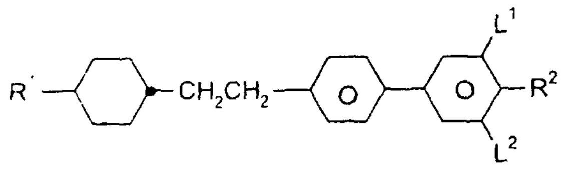

BEP

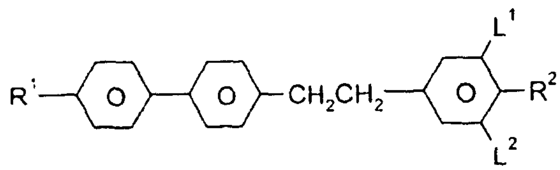

ET

**Tabelle B:**

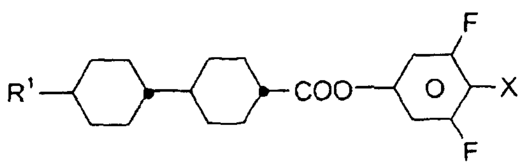

CCZU-n-X

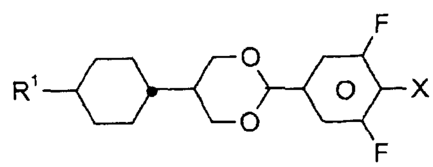

CDU-n-X

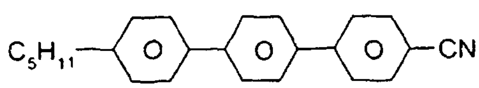

T15

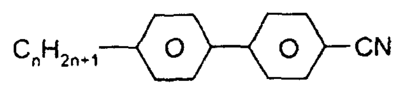

K3·n

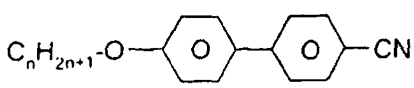

M3·n

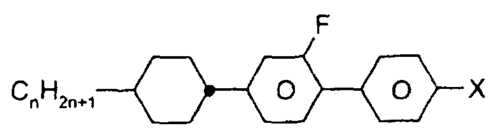

CGP-n-X

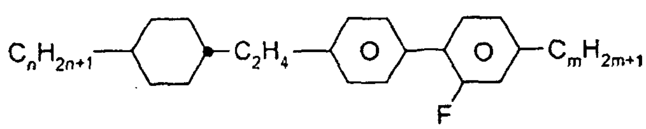

Inm

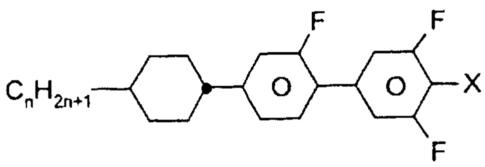

**CGU-n-X**

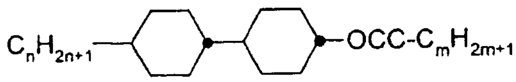

**C-nm**

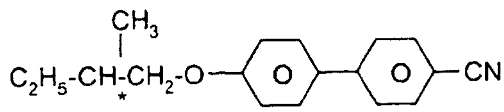

**C15**

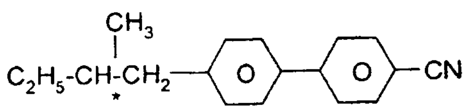

**CB15**

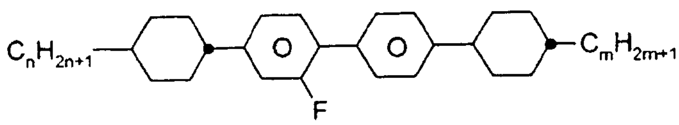

**CBC-nmF**

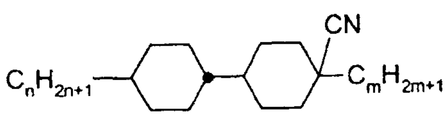

**CCN-nm**

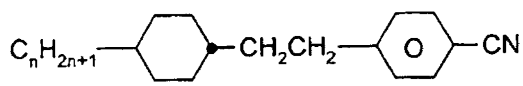

**G3·n**

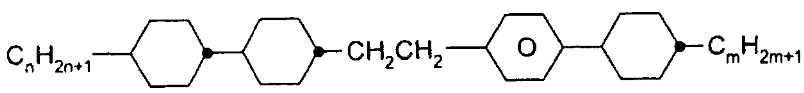

**CCEPC-nm**

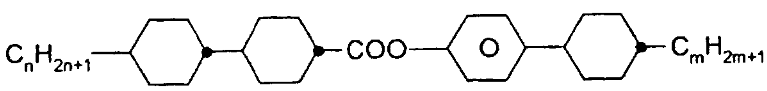

**CCPC-nm**

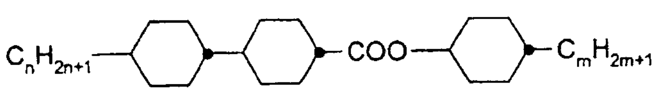

**CH-nm**

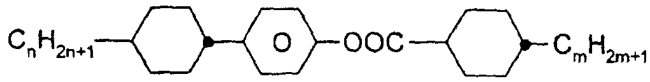

**HD-nm**

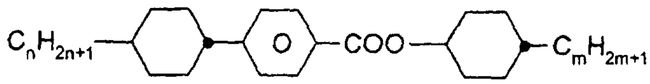

**HH-nm**

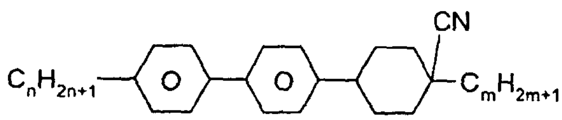

**NCB-nm**

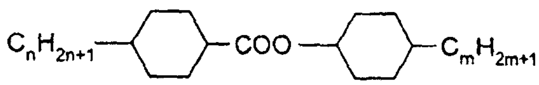

**OS-nm**

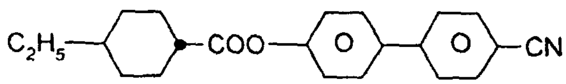

**CHE**

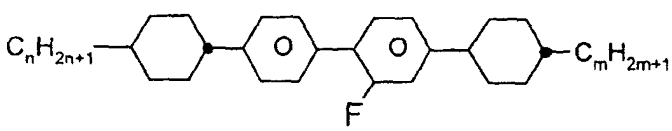

**CBC-nmF**

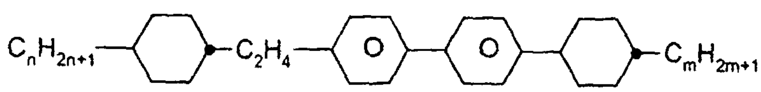

**ECBC-nm**

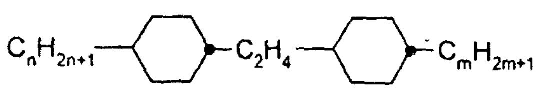

**ECCH-nm**

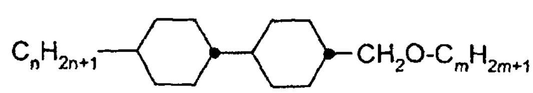

**CCH-n1Em**

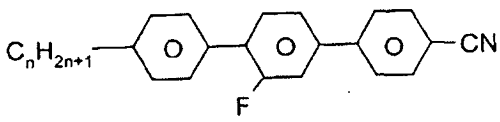

T-nFN

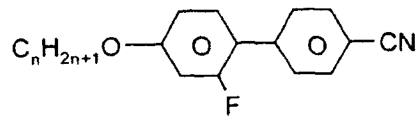

B-nO.FN

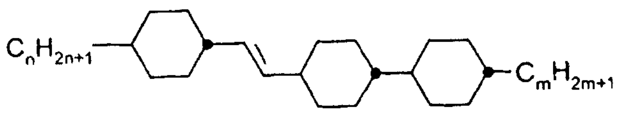

CVCC-n-m

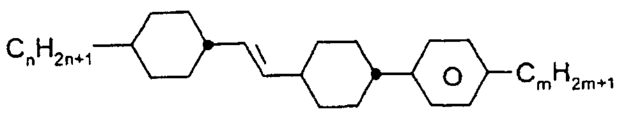

CVCP-n-m

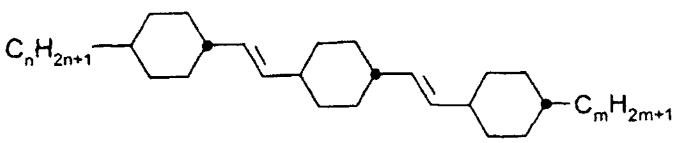

CVCVC-n-m

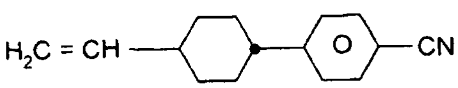

CP-V-N

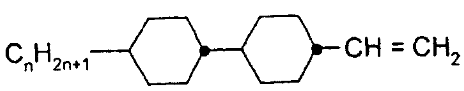

CC-n-V

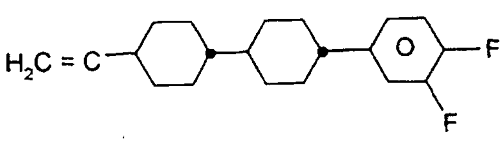

CCG-V-F

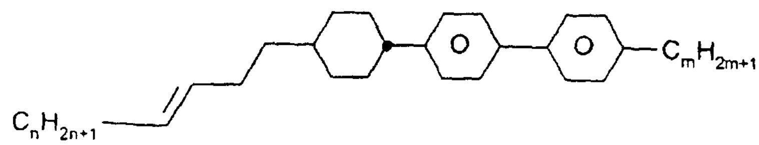

**CPP-nV2-m**

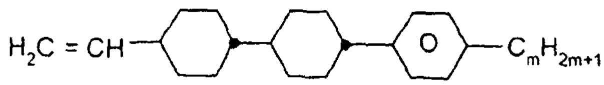

**CCP-V-m**

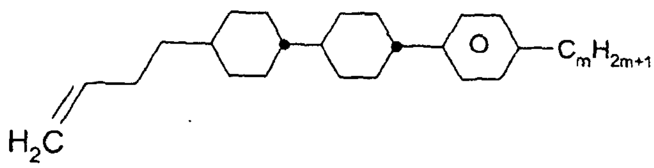

**CCP-V2-m**

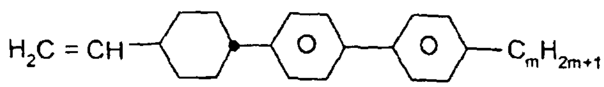

**CPP-V-m**

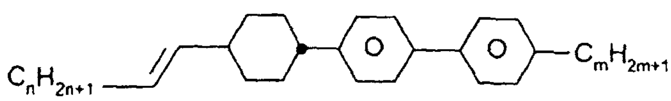

**CPP-nV-m**

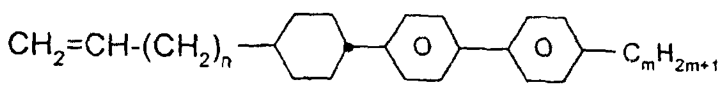

**CPP-Vn-m**

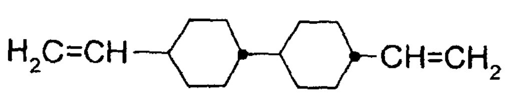

**CC-V-V**

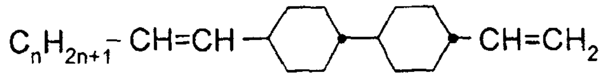

**CC-nV-V**

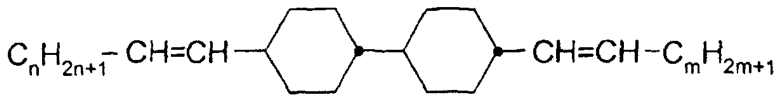

**CC-nV-Vm**

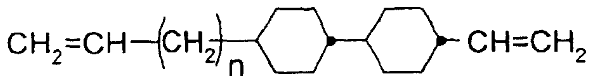

**CC-Vn-V**

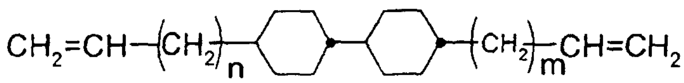

**CC-Vn-mV**

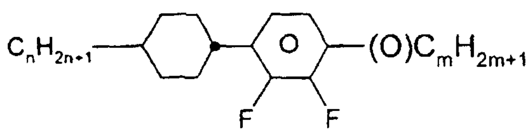

**PCH-n(O)mFF**

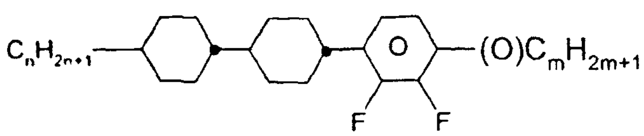

**CCP-n(O)mFF**

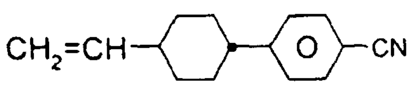

**CP-V-N**

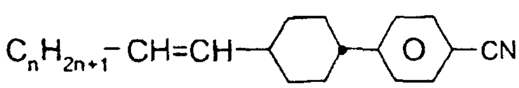

**CP-nV-N**

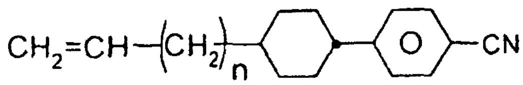

**CP-Vn-N**

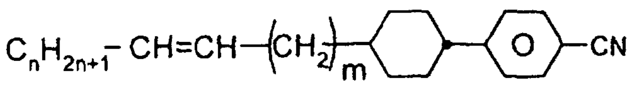

**CP-nVm-N**

Beispiele

Die folgenden Beispiele sollen die vorliegende Erfindung erläutern ohne sie in irgend einer Weise einzuschränken. Sie geben jedoch typische günstige Ausführungsformen wieder. Aus der Offenbarung der Beispiele sind für den Fachmann weitere von der vorliegenden Erfindung gelöste Aufgaben ersichtlich.

Beispiel 1

Es wurde eine Flüssigkristallmischung mit der in der folgenden Tabelle angegebenen Zusammensetzung hergestellt und in einer STN-Anzeige untersucht.

| Verbindung / Abkürzung | Konzentration / % | Physikalische Eigenschaften | |
|---|---|---|---|
| ME2N.F | 5,0 | Klärpunkt: T(N,I) | = 101,6 °C |
| ME3N.F | 5,0 | $n_e$ (20 °C, 589 nm) | = 1,6404 |
| ME4N.F | 5,0 | Δn (20 °C, 589 nm) | = 0,1443 |
| CP-1V-N | 25,0 | $HTP_{S-811}$ (20 °C) | = -12,1 $\mu m^{-1}$ |
| CC-5-V | 16,0 | | |
| CCP-V-1 | 5,0 | | |
| CCG-V-F | 19,0 | | |
| CCPC-33 | 5,0 | | |
| CPTP-301 | 5,0 | $V_{10}$ (20 °C) | = 1,76 V |
| CPTP-302 | 5,0 | $V_{50}$ (20 °C) | = 1,81 V |
| CPTP-303 | 5.0 | $V_{90}$ (20 °C) | = 1,83 V |
| Σ | 100,0 | $dV_{10}/dT$ (0-40 °C) | = 3,43 mV/°C |

Das Flüssigkristallmedium hat hervorragende anwendungstechnische Eigenschaften und zeichnet sich insbesondere durch guten Kontrast bei hohen Multiplexraten und bei hohen Betriebstemperaturen aus.

Beispiel 2

| Verbindung / Abkürzung | Konzentration / % | Physikalische Eigenschaften | |
|---|---|---|---|
| ME2N.F | 5,0 | Klärpunkt: T(N,I) | = 92,8 °C |
| ME3N.F | 5,0 | $n_e$ (20 °C, 589 nm) | = 1,6327 |
| PCH-3 | 15,0 | Δn (20 °C, 589 nm) | = 0,1391 |
| CP-1V-N | 20,0 | $\varepsilon_{\parallel}$ (20 °C, 1 kHz) | = 17,5 |
| CCG-V-F | 15,0 | Δε (20 °C, 1 kHz) | = 12,9 |
| CC-5-V | 20,0 | $k_1$ (20 °C) | = 11,2 pN |
| CCPC-33 | 5,0 | $k_3/k_1$ (20 °C) | = 2,19 |

(fortgesetzt)

| Verbindung / Abkürzung | Konzentration / % | Physikalische Eigenschaften | |
|---|---|---|---|
| CPTP-301 | 5,0 | $HTP_{S-811}$ (20 °C) | = -11,9 $\mu m^{-1}$ |
| CPTP-302 | 5,0 | | |
| CPTP-303 | 5,0 | $V_0$ (20 °C) | = 1,00 V |
| Σ | 100,0 | $V_{10}$ (20 °C) | = 1,85 V |
| | | $V_{50}$ (20 °C) | = 1,89 V |
| | | $V_{90}$ (20 °C) | = 1,82 V |
| | | $dV_{10}/dT$ (0-40 °C) | = 4,50 mV/°C |

Das Flüssigkristallmedium hat hervorragende anwendungstechnische Eigenschaften und zeichnet sich insbesondere durch eine gute Steilheit und durch einen guten Kontrast bei hohen Multiplexverhältnissen aus.

Beispiel 3

| Verbindung / Abkürzung | Konzentration / % | Physikalische Eigenschaften | |
|---|---|---|---|
| ME2N.F | 5,0 | Klärpunkt: T(N,I) | = 96,4 °C |
| ME3N.F | 5,0 | Übergang: T(S,N) | < -40 °C |
| PCH-3 | 13,0 | $n_e$ (20 °C, 589 nm) | = 1,6379 |
| CP-1V-N | 15,0 | Δn (20 °C, 589 nm) | = 0,1429 |
| CP-V2-N | 10,0 | $\varepsilon_\parallel$ (20 °C, 1 kHz) | = 17,9 |
| CCG-V-F | 15,0 | Δε (20 °C, 1 kHz) | = 13,2 |
| CC-5-V | 15,0 | $k_1$ (20 °C) | = 10,9 pN |
| CCPC-33 | 5,0 | $k_3/k_1$ (20 °C) | = 2,17 |
| CCPC-34 | 3,0 | $HTP_{S-811}$ (20 °C) | = -12,0 $\mu m^{-1}$ |
| CPTP-301 | 5,0 | | |
| CPTP-302 | 5,0 | $V_0$ (20 °C) | = 0,98 V |
| CPTP-303 | 5,0 | $V_{10}$ (20 °C) | = 1,83 V |
| Σ | 100,0 | $V_{50}$ (20 °C) | = 1,87 V |
| | | $V_{90}$(20 °C) | = 1,89 V |
| | | $dV_{10}/dT$ (0-40 °C) | = 4,33 mV/°C |

Das Flüssigkristallmedium hat hervorragende anwendungstechnische Eigenschaften und zeichnet sich insbesondere durch eine gute Steilheit und durch einen guten Kontrast bei hohen Multiplexverhältnissen aus.

Beispiel 4

| Verbindung / Abkürzung | Konzentration / % | Physikalische Eigenschaften | |
|---|---|---|---|
| ME2N.F | 5,0 | Klärpunkt: T(N,I) | = 93,5 °C |
| ME3N.F | 5,0 | Übergang: T(S,N) | < -40 °C |
| ME4N.F | 10,0 | $n_e$ (20 °C, 589 nm) | = 1,6069 |
| ME5N.F | 10,0 | Δn (20 °C, 589 nm) | = 0,1416 |
| CP-1V-N | 12,0 | $HTP_{S-811}$ (20 °C) | = -13,1$\mu m^{-1}$ |
| CP-V2-N | 19,0 | | |
| CCG-V-F | 10,0 | | |
| CCP-V-1 | 11,0 | | |
| CPTP-302 | 2,0 | | |
| CCPC-33 | 6,0 | $V_{10}$ (20 °C) | = 1,38 V |

(fortgesetzt)

| Verbindung / Abkürzung | Konzentration / % | Physikalische Eigenschaften | |
|---|---|---|---|
| CCPC-34 | 5,0 | $V_{50}$(20 °C) | = 1,40 V |
| CCPC-35 | 5,0 | $V_{90}$ (20 °C) | = 1,42 V |
| Σ | 100,0 | $dV_{10}/dT$ (0-40 °C) | = 2,50 mV/°C |

Das Flüssigkristallmedium hat hervorragende anwendungstechnische Eigenschaften und zeichnet sich insbesondere durch einen guten Kontrast bei hohen Multiplexverhältnissen und durch eine geringe Temperaturabhängigkeit der Schwellen- und der Betriebsspannung aus.

Vergleichsbeispiel 1

| Verbindung / Abkürzung | Konzentration / % | Physikalische Eigenschaften | |
|---|---|---|---|
| PCH-2 | 7,0 | Klärpunkt: T(N,I) | = 91,0 °C |
| PCH-3 | 18,0 | Übergang: T(S,N) | < - 20°C |
| PCH-4 | 14,0 | $n_e$ (20 °C, 589 nm) | = 1,6397 |
| PCH-5 | 15,0 | Δn (20 °C, 589 nm) | = 0,1427 |
| PCH-7 | 7,0 | $\varepsilon_{\parallel}$ (20 °C, 1 kHz) | = 15,4 |
| BCH-32 | 8,0 | Δε (20 °C, 1 kHz) | = 11,2 |
| CPTP-301 | 4,0 | ν (20 °C) | = 24 cSt |
| CPTP-302 | 4,0 | $k_1$ (20 °C) | = 11,6 pN |
| CPTP-303 | 4,0 | $k_2$ (20 °C) | = 6,8 pN |
| ECCP-3 | 7,0 | $k_3/k_1$ (20 °C) | = 1,92 |
| ECCP-3F | 7,0 | $HTP_{S-811}$ (20 °C) | = -11,2 $\mu m^{-1}$ |
| ECCP-5F | 7,0 | $V_0$ (20 °C) | = 1,11 V |
| Σ | 100,0 | $V_{10}$(20 °C) | = 1,97 V |
| | | $V_{50}$ (20 °C) | = 2,02 V |
| | | $V_{90}$ (20 °C) | = 2,06 V |
| | | $dV_{10}/dT$ (0-40 °C) | = 7,00 mV/°C |

Das Flüssigkristallmedium hat bestenfalls ausreichende anwendungstechnische Eigenschaften und hat insbesondere eine ungünstige, große Temperaturabhängigkeit der Schwellen- und der Betriebsspannung.

Vergleichsbeispiel 2

| Verbindung / Abkürzung | Konzentration / % | Physikalische Eigenschaften | |
|---|---|---|---|
| ME2N.F | 4,0 | Klärpunkt: T(N,I) | = 99,0 °C |
| ME3N.F | 4,0 | Übergang T(S,N) | < - 40°C |
| ME4N.F | 8,0 | $n_e$ (20 °C, 589 nm) | = 1,6431 |
| PCH-3 | 22,0 | Δn (20 °C, 589 nm) | = 0,1431 |
| PTP-102 | 2,0 | $\varepsilon_{\parallel}$ (20 °C, 1 kHz) | = 18,8 |
| CC-5-V | 5,0 | Δε (20 °C, 1 kHz) | = 13,9 |
| CCP-V-1 | 15,0 | ν (20 °C) | = 22 cSt |
| CCP-V2-1 | 7,0 | ν (-40 °C) | = 17.200 cSt |
| CCG-V-F | 20,0 | $k_3/k_1$ (20 °C) | = 2,05 |
| CPTP-301 | 4,0 | $HTP_{S-811}$ (20 °C) | = -11,8 $\mu m^{-1}$ |
| CPTP-302 | 5,0 | $V_0$ (20 °C) | = 0,97 V |

(fortgesetzt)

| Verbindung / Abkürzung | Konzentration / % | Physikalische Eigenschaften | |
|---|---|---|---|
| CPTP-303 | 4,0 | $V_{10}$ (20 °C) | = 1,77 V |
| Σ | 100,0 | $V_{50}$ (20 °C) | = 1,83 V |
| | | $V_{90}$ (20 °C) | = 1,85 V |
| | | $dV_{10}/dT$ (0-40 °C) | = 3,25 mV/°C |

Das Flüssigkristallmedium hat wie das des Vergleichsbeispiels 1 bestenfalls ausreichende anwendungstechnische Eigenschaften und weist allenfalls einen mäßigen Kontrast auf.

## Patentansprüche

1. Flüssigkristallines Medium enthaltend mindestens eine Verbindung der Formel I1 und mindestens eine Verbindung der Formel II

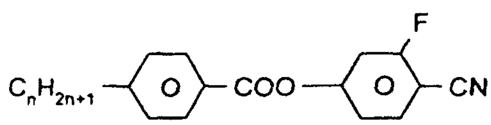

I1

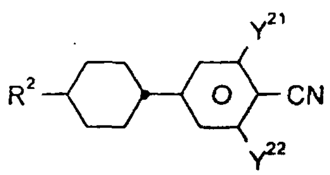

II

worin

n eine ganze Zahl von 1 bis 9,

$R^2$ Alkenyl oder Alkenyloxy mit 2 bis 7 C-Atomen und

$Y^{21}$ und $Y^{22}$ jeweils voneinander unabhängig H oder F

bedeuten.

2. Medium nach Anspruch 1, **dadurch gekennzeichnet, daß** es mindestens eine Verbindung der Formel III

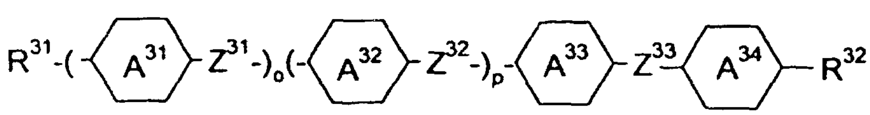

III

worin

$R^{31}$ und $R^{32}$ jeweils unabhängig voneinander Alkyl oder Alkoxy mit 1 bis 7 C-Atomen oder Alkoxyalkyl, Alkenyl oder Alkenyloxy mit 2 bis 7 C-Atomen,

$Z^{31}$, $Z^{32}$ und $Z^{33}$ jeweils unabhängig voneinander $-CH_2CH_2-$, -CH=CH-, -COO- oder eine Einfachbindung,

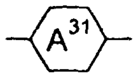,

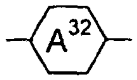,

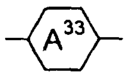

und

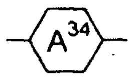

jeweils unabhängig voneinander

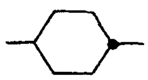,

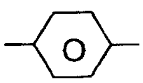, 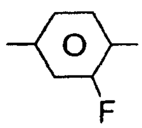, 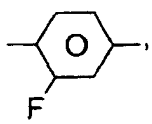, 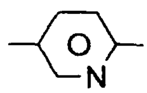

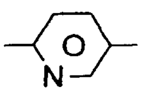, 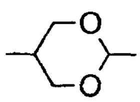 oder 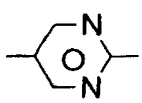

und

o und p unabhängig voneinander 0 oder 1

bedeuten,
enthält.

**3.** Medium nach Anspruch 1 oder 2, **dadurch gekennzeichnet, daß** es eine oder mehrere Verbindungen der Formel I1 jeweils in Konzentrationen von 2 % bis 15 % pro Verbindung enthält.

**4.** Medium nach mindestens einem der Ansprüche 1 bis 3, **dadurch gekennzeichnet, daß** es mindestens eine Verbindung der Formel IV,

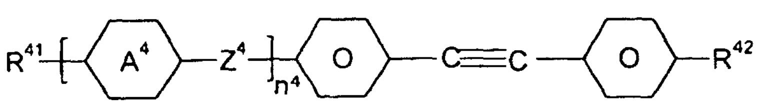 IV

$R^{41}$ und $R^{42}$ jeweils voneinander unabhängig Alkyl oder Alkoxy mit 1 bis 5 C-Atomen, bevorzugt n-Alkyl oder n-Alkoxy, bevorzugt mit 1 bis 5 C-Atomen oder Alkoxyalkyl, Alkenyl, Alkinyl oder Alkenyloxy mit 2

bis 7 C-Atomen, bevorzugt geradkettiges Alkoxyalkyl, 1E-Alkenyl oder 1E-Alkenyloxy, bevorzugt mit 1 bis 5 C-Atomen,

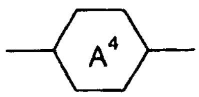 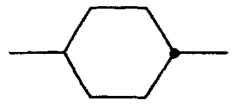 oder 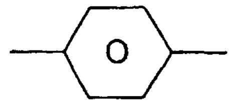 ,

$Z^4$ COO, $CH_2CH_2$, -C≡C- oder bevorzugt eine Einfachbindung,

wobei die Phenylringe unabhängig voneinander optional einfach oder zweifach durch F substituiert sein können, enthält.

**5.** Medium nach mindestens einem der Ansprüche 1 bis 4, **dadurch gekennzeichnet, daß** es mindestens eine Verbindung der Formel V

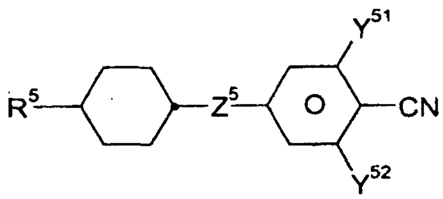

V

worin

| | |
|---|---|
| $R^5$ | Alkyl mit 1 bis 9 C-Atomen, bevorzugt n-Alkyl, bevorzugt mit 2 bis 7 C-Atomen, |
| $Z^5$ | $-CH_2CH_2-$, -COO- oder eine Einfachbindung, bevorzugt $-CH_2CH_2-$ oder eine Einfachbindung, besonders bevorzugt eine Einfachbindung und |
| $Y^{51}$ und $Y^{52}$ | jeweils unabhängig voneinander H oder F, bevorzugt einer H und der andere F oder beide F, besonders bevorzugt beide H |

bedeuten,
enthält.

**6.** Medium nach mindestens einem der Ansprüche 1 bis 5, **dadurch gekennzeichnet, daß** es eine oder mehrere Verbindung(en) der Formel II1

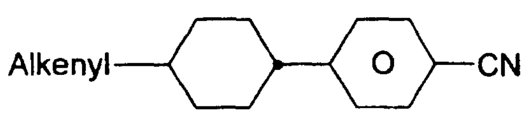

II1

worin

| | |
|---|---|
| Alkenyl | $C_nH_{2n+1}$-CH=CH-$(CH_2)_m$, |
| n | 0 bis 5, |
| m | 0 bis 5 und |
| n+m | 0 bis 5 |

bedeuten,
enthält.

**7.** Medium nach Anspruch 6, **dadurch gekennzeichnet, daß** es eine oder mehrere Verbindung(en) der Formel II1

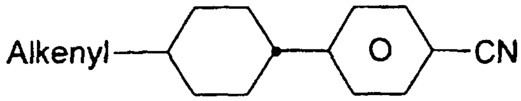

II1

worin

Alkenyl $C_nH_{2n+1}$-CH=CH- und

n 1 bis 5

bedeuten,
enthält.

**8.** Medium nach Anspruch 6, **dadurch gekennzeichnet, daß** es die Verbindung der Formel II1a

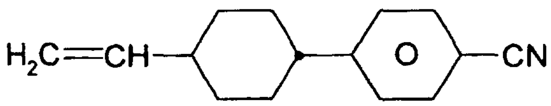

II1a

enthält.

**9.** Medium nach mindestens einem der Ansprüche 1 bis 8, **dadurch gekennzeichnet, daß** es eine oder mehrere Verbindung(en) ausgewählt aus der Gruppe der Verbindungen der Formeln VI2a und VI2b

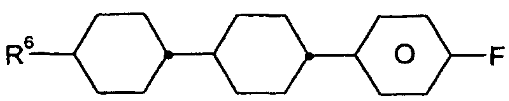

VI2a

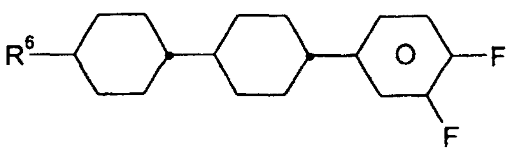

VI2b

worin

$R^6$ Alkyl oder Alkoxy mit 1 bis 7 C-Atomen oder Alkoxyalkyl, Alkenyl oder Alkenyloxy mit 2 bis 7 C-Atomen,

enthält.

**10.** Verwendung eines Flüssigkristallmediums nach mindestens einem der Ansprüche 1 bis 9 in einer elektrooptischen Anzeige.

**11.** Elektrooptische Anzeige enthaltend ein Flüssigkristallmedium nach mindestens einem der Ansprüche 1 bis 9.

**12.** Anzeigeelement nach Anspruch 11, **dadurch gekennzeichnet, daß** es sich um ein STN LCD handelt.

## Claims

**1.** Liquid-crystalline medium comprising at least one compound of the formula I1 and at least one compound of the formula II

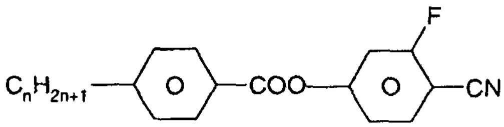

I1

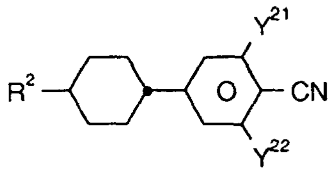

II

in which

n denotes an integer from 1 to 9,

$R^2$ denotes alkenyl or alkenyloxy having 2 to 7 C atoms and

$Y^{21}$ and $Y^{22}$ each, independently of one another, denote H or F.

**2.** Medium according to Claim 1, **characterised in that** it comprises at least one compound of the formula III

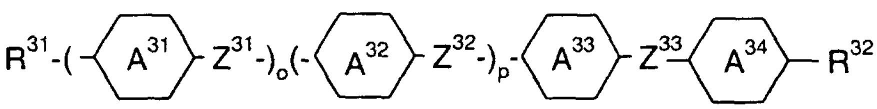

III

in which

$R^{31}$ and $R^{32}$ each, independently of one another, denote alkyl or alkoxy having 1 to 7 C atoms or alkoxyalkyl, alkenyl or alkenyloxy having 2 to 7 C atoms,

$Z^{31}$, $Z^{32}$ and $Z^{33}$ each, independently of one another, denote $-CH_2CH_2-$, -CH=CH-, -COO- or a single bond,

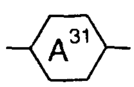,

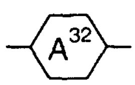,

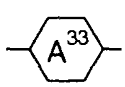

and

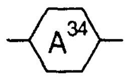

each, independently of one another, denote

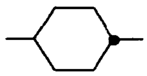,

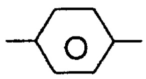, 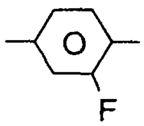, 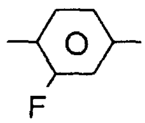, 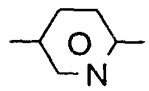

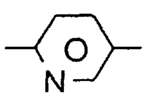, 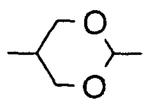 or 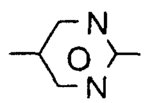

and

o and p, independently of one another, denote 0 or 1.

**3.** Medium according to Claim 1 or 2, **characterised in that** it comprises one or more compounds of the formula I1, each in concentrations of 2% to 15% per compound.

**4.** Medium according to at least one of Claims 1 to 3, **characterised in that** it comprises at least one compound of the formula IV

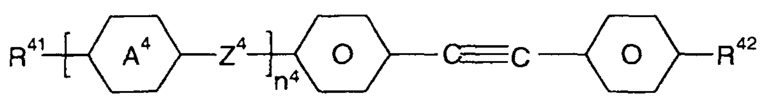

IV

$R^{41}$ and $R^{42}$ each, independently of one another, denote alkyl or alkoxy having 1 to 5 C atoms, preferably n-alkyl or n-alkoxy, preferably having 1 to 5 C atoms, or alkoxy-alkyl, alkenyl, alkynyl or alkenyloxy having 2 to 7 C atoms, preferably straight-chain alkoxyalkyl, 1E-alkenyl or 1E-alkenyloxy, preferably having 1 to 5 C atoms,

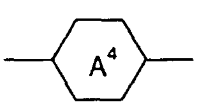 denotes 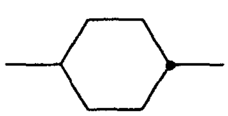 or 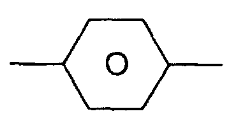,

$Z^4$ denotes COO, $CH_2CH_2$, -C=C- or preferably a single bond,

where the phenyl rings, independently of one another, may optionally be monosubstituted or disubstituted by F.

**5.** Medium according to at least one of Claims 1 to 4, **characterised in that** it comprises at least one compound of the formula V

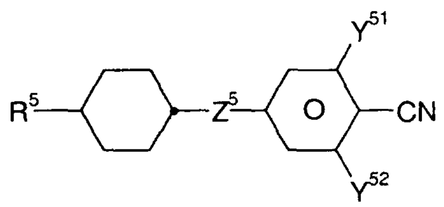

V

in which

| | |
|---|---|
| $R^5$ | denotes alkyl having 1 to 9 C atoms, preferably n-alkyl, preferably having 2 to 7 C atoms, |
| $Z^5$ | denotes $-CH_2CH_2-$, -COO- or a single bond, preferably $-CH_2CH_2-$ or a single bond, particularly preferably a single bond, and |
| $Y^{51}$ and $Y^{52}$ | each, independently of one another, denote H or F, preferably one denotes H and the other denotes F or both denote F, particularly preferably both denote H. |

**6.** Medium according to at least one of Claims 1 to 5, **characterised in that** it comprises one or more compound(s) of the formula II1

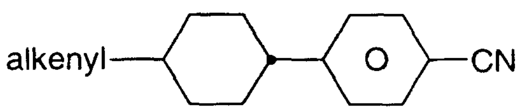

II1

in which

| | |
|---|---|
| alkenyl | denotes $C_nH_{2n+1}-CH=CH-(CH_2)_m$, |
| n | denotes 0 to 5, |
| m | denotes 0 to 5, and |
| n+m | denotes 0 to 5. |

**7.** Medium according to Claim 6, **characterised in that** it comprises one or more compound(s) of the formula II1

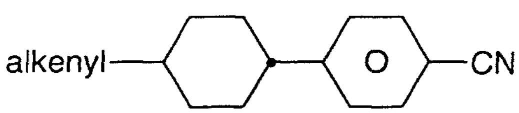

II1

in which

| | |
|---|---|
| alkenyl | denotes $C_nH_{2n+1}-CH=CH-$ and |
| n | denotes 1 to 5. |

**8.** Medium according to Claim 6, **characterised in that** it comprises the compound of the formula II1a

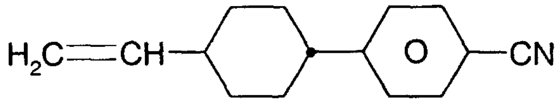

II1a

**9.** Medium according to at least one of Claims 1 to 8, **characterised in that** it comprises one or more compound(s) selected from the group of the compounds of the formulae VI2a and VI2b

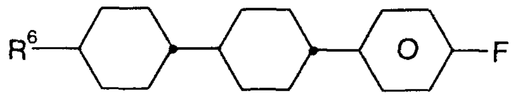

VI2a

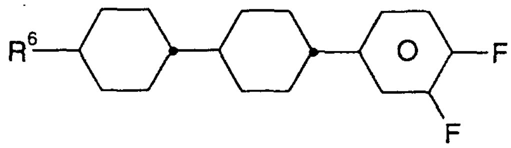

VI2b

in which

$R^6$ denotes alkyl or alkoxy having 1 to 7 C atoms or alkoxyalkyl, alkenyl or alkenyloxy having 2 to 7 C atoms.

**10.** Use of a liquid-crystal medium according to at least one of Claims 1 to 9 in an electro-optical display.

**11.** Electro-optical display containing a liquid-crystal medium according to at least one of Claims 1 to 9.

**12.** Display element according to Claim 11, **characterised in that** it is an STN LCD.

**Revendications**

**1.** Milieu de cristaux liquides comprenant au moins un composé de la formule I1 et au moins un composé de la formule II

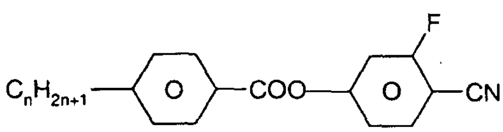

I1

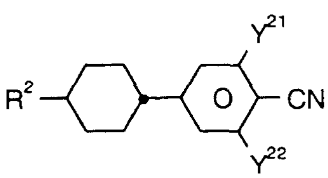

II

dans lesquelles

n représente un entier de 1 à 9,

$R^2$ représente alkényle ou alkényloxy comportant de 2 à 7 atomes de C et

$Y^{21}$ et $Y^{22}$ chacun indépendamment l'un de l'autre, représentent H ou F.

2. Milieu selon la revendication 1, **caractérisé en ce qu'**il comprend au moins un composé de la formule III

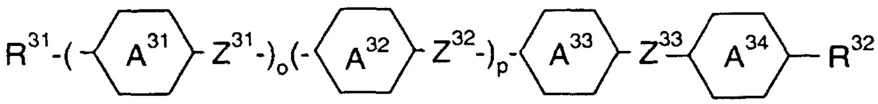

III

dans laquelle

$R^{31}$ et $R^{32}$ chacun indépendamment l'un de l'autre, représentent alkyle ou alkoxy comportant de 1 à 7 atomes de C ou alkoxyalkyl, alkényle ou alkényloxy comportant de 2 à 7 atomes de C,

$Z^{31}$, $Z^{32}$ et $Z^{33}$ chacun indépendamment l'un de l'autre, représentent $-CH_2CH_2-$, -CH=CH-, -COO- ou une liaison simple,

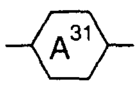,

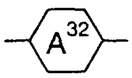,

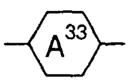

et

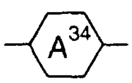

chacun indépendamment les uns des autres, représentent

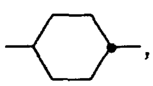, 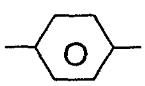, 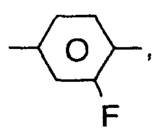, 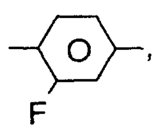, 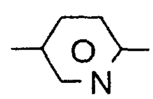

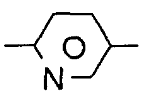, 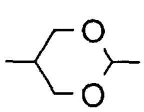 ou 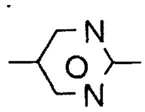

et

o et p, indépendamment l'un de l'autre, représentent 0 ou 1.

3. Milieu selon la revendication 1 ou 2, **caractérisé en ce qu'**il comprend un ou plusieurs composés de la formula I1, chacun selon des concentrations de 2% à 15% par composé.

**4.** Milieu selon. au moins l'une des revendications 1 à 3, **caractérisé en ce qu'**il comprend au moins un composé de la formule IV

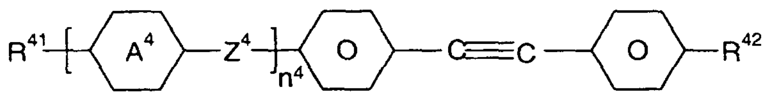

IV

$R^{41}$ et $R^{42}$ chacun indépendamment l'un de l'autre, représentent alkyle ou alkoxy comportant de 1 à 5 atomes de C, de préférence n-alkyle ou n-alkoxy, de préférence comportant de 1 à 5 atomes de C, ou alkoxyalkyle, alkényle, alkynyle ou alkényloxy comportant de 2 à 7 atomes de C, de préférence alkoxyalkyle, 1E-alkényle ou 1E-alkényloxy en chaîne droite, de préférence comportant de 1 à 5 atomes de C,

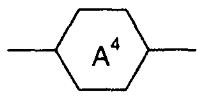 représente 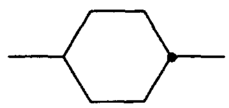 ou 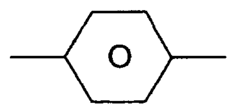 ,

$Z^4$ représente COO, $CH_2CH_2$, -C≡C- ou de préférence une liaison simple,

où les anneaux phényle, indépendamment les uns des autres, peuvent en option être monosubstitués ou disubstitués par F.

**5.** Milieu selon au moins l'une des revendications 1 à 4, **caractérisé en ce qu'**il comprend au moins un composé de la formule V

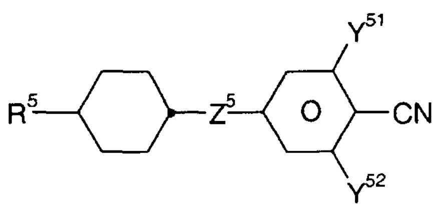

V

dans laquelle

$R^5$ représente alkyle comportant de 1 à 9 atomes de C, de préférence n-alkyle, de préférence comportant de 2 à 7 atomes de C,

$Z^5$ représente $-CH_2CH_2-$, -COO- ou une liaison simple, de préférence $-CH_2CH_2-$ ou une liaison simple, de façon particulièrement préférable une liaison simple, et

$Y^{51}$ et $Y^{52}$ chacun indépendamment l'un de l'autre, représentent H ou F, de préférence l'un représente H et l'autre représente F ou les deux représentent F, de façon particulièrement préférable, les deux représentent H.

**6.** Milieu selon au moins l'une des revendications 1 à 5, **caractérisé en ce qu'**il comprend un ou plusieurs composé (s) de la formule II1

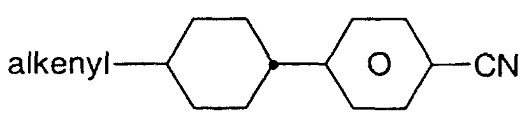

II1

dans laquelle

alkenyl représente $C_nH_{2n+1}$-CH=CH-$(CH_2)_m$,

n représente 0 à 5,

m représente 0 à 5, et

n+m représente 0 à 5.

**7.** Milieu selon la revendication 6, **caractérisé en ce qu'**il comprend un ou plusieurs composé(s) de la formule II1

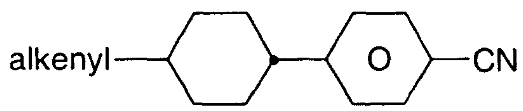

II1

dans laquelle

alkenyl représente $C_nH_{2n+1}$-CH=CH- et

n représente 1 à 5.

**8.** Milieu selon la revendication 6, **caractérisé en ce qu'**il comprend le composé de la formule II1a

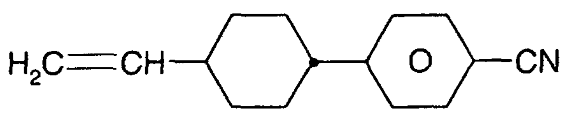

II1a

**9.** Milieu selon au moins l'une des revendications 1 à 8, **caractérisé en ce qu'**il comprend un ou plusieurs composé (s) choisis parmi le groupe des composés des formules VI2a et VI2b

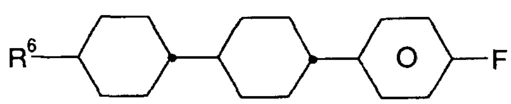

VI2a

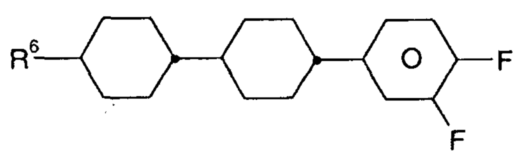

VI2b

dans lesquelles

$R^6$ représente alkyle ou alkoxy comportant de 1 à 7 atomes de C ou alkoxyalkyle, alkényle ou alkényloxy comportant de 2 à 7 atomes de C.

**10.** Utilisation d'un milieu de cristaux liquides selon au moins l'une des revendications 1 à 9 dans un affichage électro-optique.

**11.** Affichage électro-optique contenant un milieu de cristaux liquides selon au moins l'une des revendications 1 à 9.

**12.** Elément d'affichage selon la revendication 11, **caractérisé en ce qu'**il s'agit d'un STN LCD.